# EUROPÄISCHE PATENTSCHRIFT

(11) **EP 1 994 292 B1**
(45) Veröffentlichungstag und Bekanntmachung des Hinweises auf die Patenterteilung: **01.12.2010**
(21) Anmeldenummer: 07712118.4
(22) Anmeldetag: 26.01.2007
(51) Int. Cl.: F16C 19/46, F16C 33/58, F16C 43/08

(54) **VERFAHREN ZUM HERSTELLEN EINES EINBAUFERTIGEN NADELLAGER MIT INNEN- UND AUSSENRING**
METHOD OF MAKING A READY-TO-INSTALL NEEDLE BEARING COMPRISING AN INNER AND OUTER RING
PROCÉDÉ DE FABRICATION UN ROULEMENT À AIGUILLES PRÊT AU MONTAGE POURVU D'UNE BAGUE INTERNE ET D'UNE BAGUE EXTERNE

(30) Priorität: 07.03.2006 DE 102006010313
(43) Veröffentlichungstag der Anmeldung: 26.11.2008
(73) Patentinhaber: Schaeffler Technologies GmbH & Co. KG, 91074 Herzogenaurach (DE)
(72) Erfinder: LUNZ, Erich, 91475 Lonnerstadt (DE)
(86) Internationale Anmeldenummer: PCT/EP2007/050802
(87) Internationale Veröffentlichungsnummer: WO 2007/101750

(56) Entgegenhaltungen:
- DE-A1- 2 257 155
- DE-A1- 2 741 057
- DE-C- 641 956
- DE-U- 1 910 796
- US-A- 2 074 182

## Beschreibung

### Anwendungsgebiet der Erfindung

Die Erfindung betrifft ein Verfahren zum Herstellen eines einbaufertigen Nadellagers mit einem spanlos geformten dünnwandigen Außenring, der beidseitig mit radial nach innen gerichteten Anlaufborde versehen ist, zwischen denen auf einer zugehörigen Außenlaufbahn Nadelrollen abwälzen, wobei eine zugehörige Innenlaufbahn von einem spanlos geformten, dünnwandigen Innenring gebildet ist, der beidseitig mit radial nach außen gerichteten Anlaufborden versehen ist, so dass zwischen den Anlaufborden ein umlaufender Ringspalt gebildet ist und wobei in einer Mittellage die Anlaufborden des Innenringes mit den Anlaufborden des Außenringes in axialer Richtung fluchten und die Nadelrollen vollrollig oder in einem Käfig angeordnet sind.

### Hintergrund der Erfindung

Das Nadellager ist eine Zylinderrollenlager-Variante mit dünnen, langen Rollkörpern und ist nur radial belastbar. Nadellager haben Nadelrollen mit einem Verhältnis Durchmesser: Länge zwischen 1 : 2,5 und 1 : 10. Die axiale Führung der Nadelrollen übernehmen die radialen und axialen Gleitflächen des Käfigs oder Anlaufborde der Lagerringe. Nadellager haben eine sehr geringe Bauhöhe, sie eignen sich daher besonders für den Leichtbau und Konstruktionen, bei denen der Einbauraum in radialer Richtung begrenzt ist.

Ein einbaufertiges Nadellager in Form einer Nadelhülse ist aus dem Katalog 307 "Nadellager/Zylinderrollenlager" der INA Wälzlager Schaeffler KG, Industriestraße 1-3, 91072 Herzogenaurach, März 1997, vorbekannt. Wie die zugehörige Seite 116 des Kataloges zeigt, besteht ein derartiges Nadellager aus einem dünnwandigen, spanlos geformten Außenring, der beidseitig mit radial nach innen gerichteten Anlaufborden versehen ist. Zwischen beiden Anlaufborden ist ein aus Nadelrollen und Käfig bestehender Nadelkranz angeordnet, wobei der Käfig die Nadelrollen einerseits gegen ein herausfallen in radialer Richtung nach innen schützt und andrerseits diese achsparallel führt. Diese Nadelhülse setzt jedoch aufgrund ihres fehlenden Innenringes voraus, dass eine gelagerte Welle als Innenlaufbahn genutzt werden muss. Es ist daher erforderlich, dass eine solche Welle in aufwändiger Weise zu hörten und zu schleifen ist.

Ein anderes einbaufertiges Nadellager zeichnet sich dadurch aus, dass die Nadelrollen wiederum in einer dünnwandigen, spanlos geformten, die äußere Laufbahn bildenden Hülse axial und radial nach außen gehalten sind. Um die Nadelrollen auch nach innen gegen Herausfallen zu sichern, ist es bekannt, die seitlichen Anlaufborde der Hülse um die Enden der Nadelrollen herumzubördeln. Nachteilig dabei ist, dass bei dieser Anordnung die Enden der Nadelrollen mit einem Zapfen versehen sein müssen, der vom Bördelrand der Anlaufborde untergriffen wird. Derartig ausgestaltete Nadelrollen sind jedoch in der Herstellung sehr aufwendig. Ein solches einbaufertiges Nadellager ist beispielsweise aus der DE 1 894 138 U1 bekannt. Es ist weiter von Nachteil, dass auch in diesem Fall, wie bereits vorstehend ausgeführt, aufgrund des fehlenden Innenringes die zu lagernde Welle, die die innere Laufbahn stellt, wiederum in aufwändiger Weise gehärtet und geschliffen werden muss. Aufgrund des fehlenden Nadelrollenkäfigs ist zwar eine erhöhte Tragzahl möglich, aber die umständliche Halterung der Nadelrollen mit ihren sich verjüngenden Vorsprüngen durch die Bördelränder der Anlaufborde erschwert die Montage eines solchen Lagers erheblich.

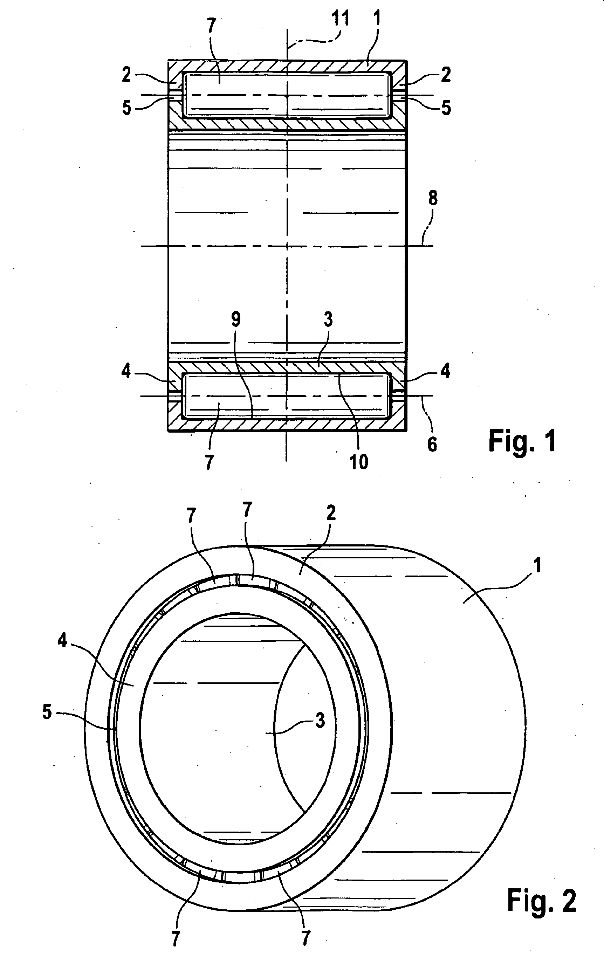

Nun ist zwar in diesem Zusammenhang aus der DE 928 020 ein Nadellager bekannt geworden, das auf den ersten Blick mit der erfindungsgemäßen Lösung in einem direkten Zusammenhang zu stehen scheint. In den Figuren 1 und 2 ist ein Nadellager gezeigt, das aus zwei Lagerringen besteht, die beide radial nach innen und radial nach außen gerichtete Borde aufweisen. Abgesehen davon, dass das Nadellager nach der DE 928 020 spanend und nicht spanlos gefertigt ist, geht aus der Beschreibung hervor, dass die Borde ungleich sind. Auf Seite 2 in Spalte 1, Zeile 24 und folgende ist aufgeführt, dass unter Bezugnahme auf die Figur 1 zunächst die Nadeln 1 in den mit den Borden 2 und 3 versehenen Innenring 4 unter Zuhilfenahme eines steifen Fettes eingebettet worden sind und der vorher erwärmte Außenring 5 von links nach rechts über die Nadeln hinweggeschoben wird. Diese Herstellungsweise ist insbesondere dadurch ermöglicht, dass nur der Bord 6 des Außenringes normal ausgeführt ist, während der Bord 7 eine so geringe Höhe aufweist, dass er ein Hinüberschieben des durch die Erwärmung gedehnten Außenringes 5 zulässt und nach dessen Abkühlung eine feste Verbindung der Bestandteile 1, 4 und 5 herbeiführt. Dies bedeutet, dass dieser verkürzte Bord 7 eine so geringe Höhe aufweist, so dass eine radiale Überschneidung zwischen Lagernadel 1 und Bord 7 lediglich im µm-Bereich realisiert ist. Bei einer unkontrollierten Erwärmung des Lagers könnte es dazu kommen, dass kein axialer Anlauf der Lagernadeln 1 am Bord 7 des Außenringes möglich ist.

Ein einbauferliges Nadellager, wie es im Oberbegriff des Anspruchs 1 beschrieben wird, ist aus DE 27 41 057 A bekannt.

### Zusammenfassung der Erfindung

Ausgehend von den Nachteilen des bekannten Standes der Technik liegt der Erfindung daher die Aufgabe zugrunde, ein einbaufertiges Nadellager bereitzustellen, das eine hohe Tragfähigkeit aufweist, sich in einfacher Weise ohne großen Aufwand kostengünstig herstellen lässt und eine aufwändige Bearbeitung eines zu lagernden Teils nicht erfordert.

Erfindungsgemäß wird diese Aufgabe nach dem kennzeichnenden Teil von Anspruch 1 in Verbindung mit dessen Oberbegriff gelöst.

Das erfindungsgemäße Verfahren zum Herstellen eines Nadellagers zeichnet sich dadurch aus, dass aus einer spanlos gezogenen Hülse ein Außenring und aus einer spanlos gezogenen Hülse ein Innenring abgestochen werden, anschließend beide Ringe konzentrisch ineinander angeordnet Werden, danach zwischen Außen- und Innenring Nadelrollen eingeführt werden, bevor durch einen Bördel- oder Rolliervorgang sowohl die Anlaufborde des Außen- als auch des Innenringes umgelegt werden.

Weiter wird das Nadellager einer Gesamthärtung unterworfen ist. Durch die erfindungsgemäße Härtung der Lageranordnung wird einerseits deren Tragfähigkeit erhöht und andererseits wird durch die Gesamthärtung erreicht, dass alle Lagerkomponenten eine gleiche Behandlung erfahren, so dass Verzüge aufgrund dieser gleichartigen Behandlung minimiert werden können.

Auf diese Weise ist ein einbaufertiges Nadellager geschaffen, das aus den Lagerbestandteilen Außenring, Innenring und vollrolliger Nadelrollensatz oder Nadelkranz besteht und durch Formschluss als unverlierbare Baueinheit aus- gebilde ist. Durch den fehlenden Lagerkäfig erhöht sich die Tragfähigkeit wesentlich, da einerseits in Umfangsrichtung mehr Nadelrollen angeordnet werden können und andererseits die Nadelrollen in axialer Richtung eine ebenfalls erhöhte Tragfläche aufweisen. Durch den nunmehr vorhandenen Innenring muss ein zu lagerndes Teil nicht als Laufbahn der Nadelrollen dienen, so dass es weich bleiben kann, d.h., nicht in aufwändiger Weise gehärtet und geschliffen werden braucht. Auch lässt sich das erfindungsgemäße Nadellager durch Spanlostechnologie in effektiver Weise in unterschiedlichen Größenordnungen fertigen und montieren.

Im Falle eines fehlenden Lagerkäfigs erhöht sich die Tagfähigkeit, da einerseits in Umfangsrichtung mehr Nadelrollen angeordnet werden können und andererseits die Nadelrollen in axialer Richtung eine ebenfalls erhöhte Tragfläche aufweisen. Durch die vollrollige Ausführung ist ein Nadellager für eine hohe Belastung geschaffen, dessen Drehzahlen durch die gegenseitige Berührung der Nadelrollen an ihren Mantelflächen eingeschränkt ist. Aber auch ein solches in der Drehzahl eingeschränktes Nadellager lässt sich für viele Fälle vorteilhaft einsetzen, beispielsweise für Schwenkbewegungen. Die Käfigvariante hingegen mag zwar in der Tragfähigkeit etwas eingeschränkt sein, erlaubt aber eine höhere Drehzahl bei gleichzeitig ruhigerem Lauf des Lagers.

Die Erfindung wird an nachstehendem Ausführungsbeispiel näher erläutert.

### Kurze Beschreibung der Zeichnungen

Es zeigen:
- Figur 1: einen Längsschnitt durch ein erfindungsgemäß hergestelltes einbaufertiges vollrolliges Nadellager und
- Figur 2: eine perspektivische Darstellung des Nadellagers nach Figur 1

### Ausführliche Beschreibung der Zeichnungen

Das in den Figuren 1 und 2 dargestellte, erfindungsgemäß hergestellte, einbaufertige Nadellager, besteht aus dem Außenring 1 und dem Innenring 3, die konzentrisch ineinander angeordnet sind. Sowohl der Außenring 1 als auch der Innenring 3 sind beidseitig an ihren axialen Enden mit Anlaufborden 2, 4 versehen, die radial nach innen und radial nach außen gerichtet sind, wobei zwischen beiden ein umlaufender Ringspalt 5 gebildet ist. Dieser kann in seiner radialen Ausdehnung durch die Länge der Anlaufborde 2, 4 variiert werden, wobei bei einer möglichst kleinen Ausdehnung des Ringspaltes 5 eine vorteilhafte Abdichtung des Lagers realisiert ist. Die radiale Ausdehnung der Anlaufborde 2, 4 beträgt dabei üblicherweise 25 - 40 % des Durchmessers der Nadelrollen 7, so dass ein sicherer axialer Anlauf realisiert ist. Im zwischen den beiden Ringen 1, 3 gebildeten, nicht näher bezeichneten Freiraum sind Nadelrollen 7 untergebracht, die bei Rotation des Lagers um die Achse 8 um ihre eigene Achse 6 rotieren, wobei die Außenlaufbahn mit 9 und die Innenlaufbahn mit 10 bezeichnet ist. Wie die Figuren 1 und 2 weiter erkennen lassen, ist das Nadellager als eine einbaufertige, unverlierbare Baueinheit gestaltet, die nicht in ihre Einzelbestandteile zerfallen kann. Der Zusammenhalt erfolgt durch formschlüssiges Hintergreifen zwischen Anlaufborden 2, 4 und Nadelrollen 7. In Figur 1 ist das Nadellager in einer Mittellage dargestellt, wobei ausgehend von der Mittelsenkrechten 11 in beiden Richtungen die Anlaufborde 2, 4 axial fluchten. Mit anderen Worten, in der Mittellage stehen die Anlaufborde 2, 4 ohne axialen Versatz übereinander. Es versteht sich, dass allein durch die erforderlichen Toleranzen zwischen Anlaufborden 2, 4 und Nadelrollen 7 eine gewisse axiale Verschiebemöglichkeit des einen Lagerringes 1, 3 bei festgelegtem andern Lagerring 3, 1 gegeben sein muss. Im vorliegenden zeichnerisch dargestellten Ausführungsbeispiel sind die Nadelrollen 7 vollrollig, d.h., ohne Lagerkäfig zwischen den Lagerringen 1, 3 angeordnet, so dass durch deren größtmögliche Anzahl ein Tragzahloptimum gegeben ist. Dabei berühren sich zwar die einander tangierten Nadelrollen 7 an ihren Kontaktstellen, an denen sich ihre Mantelflächen im entgegen gesetzten Drehsinn reiben. Aufgrund dieser größeren Verlustleistung im Nadellager verringert sich zwar die Drehzahlgrenze, was jedoch unter bestimmten Einsatzbedingungen eines solch erfindungsgemäß ausgebildeten Nadellagers ohne Bedeutung ist. Dieses Lager könnte beispielsweise als einfache, kostengünstige Lösung im unteren Segment der Leistungsanförderungen eingesetzt werden.

Die Herstellung des einbaufertigen Nadellagers erfolgt derart, dass zunächst aus einer spanlos geformten, dünnwandigen zylindrischen Hülse ein Außenring 1 und aus einer im Durchmesser kleineren zylindrischen Hülse ein Innenring 3 abgestochen wird. Die axiale Ausdehnung der vereinzelten Ringe 1, 3 ist dabei so zu bemessen, dass die spätere gewünschte radiale Länge der Anlaufborde 2, 4 berücksichtigt ist. Anschließend wird der Innenring 3 in den Außenring 1 eingeschoben, bevor im zwischen beiden gebildeten Ringraum Nadelrollen 7 eingeführt werden. Durch den an sich bekannten Einsatz von Rollierwerkzeugen, wobei ein drehbarer Aufnahmedorn und eine ebenfalls drehbare Rollierrolle einander angenähert werden, werden die in der Anfangslage parallel zur Lagerachse 8 verlaufenden Anlaufborde 2, 4 um 90° radial nach innen und radial nach außen umgelegt. Dabei kann es vorteilhaft sein, wenn die Laufbahnen 9, 10 zu deren Glättung von den Rollierwerkzeugen mit erfasst werden.

Ein vorstehend beschriebenes einbaufertiges Nadellager gemäß der Erfindung kann beispielsweise aus einem durchhärtenden Standardstahl der Marke 100 Cr 6, d.h., einem Stahl mit 1% Kohlenstoff und 1,5% Chrom oder aus einem Stahl der Marke C45M hergestellt sein. Nach Fertigstellung, d.h., nach seinem Komplettzusammenbau in seiner endgültigen Form, wird es in bekannter Weise einem Gesamthärten unterworfen. Dabei wird es zunächst auf Austenitisierungstemperatur erwärmt und anschließend zur Umwandlung in Martensit abgeschreckt. Dabei wird für alle Lagerbestandteile eine Härte von 60 HRC über den gesamten Querschnitt realisiert.

Auf diese Weise ist eine einbaufertige Nadellagerbaueinheit geschaffen, die unverlierbar zusammengehalten ist, eine hohe Tragkraft aufweist und sich durch spanlose Formgebungsverfahren in unterschiedlichen Größenverhältnissen herstellen lässt. Das Nadellager kann auch geringe Axialkräfte aufnehmen und sorgt durch seinen Innenring dafür, dass eine zu lagernde Welle nicht in aufwändiger Weise gehärtet und fein geschliffen werden muss. Mit anderen Worten, das Lager eignet sich insbesondere für sogenannte "low cost" Anwendungen, indem es lediglich einfache Anforderungen zu erfüllen hat. Dies betrifft insbesondere die geringere Drehzahl gegenüber käfiggeführten Nadellagern bei einer gleichzeitig aber erhöhten Tragfähigkeit.

Auf die zeichnerische Darstellung einer zweiten Erfindungsvariante, bei der die Nadelrollen in einem Käfig angeordnet sind, sei an dieser Stelle verzichtet. Zum einen, weil die vorstehende detaillierte Beschreibung dem Grunde nach auch für die Käfigvariante gilt, zum anderen weil Nadellager mit Käfigen dem Fachmann seit langem hinreichend bekannt sind. Solche mit einem Käfig ausgestattete Nadellager gehen beispielsweise aus der DE 1 623 501 U1, der DE 66 05 971 U1 oder der DE 197 32 478 B4 hervor.

### Bezugszahlenliste

- 1: Außenring
- 2: Anlaufbord
- 3: Innenring
- 4: Anlaufbord
- 5: Ringspalt
- 6: Achse
- 7: Nadelrolle
- 8: Achse
- 9: Außenlaufbahn
- 10: Innenlaufbahn
- 11: Mittelsenkrechte

## Patentansprüche

1. Verfahren zum Herstellen eines einbaufertigen Nadellagers, welches aus einem spanlos geformten, dünnwandigen Außenring (1), der beidseitig mit radial nach innen gerichteten Anlaufborden (2) versehen ist, zwischen denen auf einer zugehörigen Außenlaufbahn (9) Nadelrollen (7) abwälzen, und aus einem spanlos geformten, dünnwandigen Innenring (3), der eine zugehörige Innenlaufbahn (10) bildet und beidseitig mit radial nach außen gerichteten Anlaufborden (4) versehen ist, besteht, so dass zwischen den Anlaufborden (2, 4) ein umlaufender Ringspalt (5) gebildet ist, wobei in einer Mittellage die Anlaufborde (4) des Innenringes (3) mit den Anlaufborden (2) des Außenringes (1) in axialer Richtung fluchten und wobei die Nadelrollen (7) vollrollig oder in einem Käfig angeordnet sind, **dadurch gekennzeichnet, dass** zunächst aus einer spanlos gezogenen zylindrischen Hülse ein Außenring (1) und aus einer spanlos gezogenen zylindrischen Hülse ein Innenring (3) abgestochen werden, anschließend beide Ringe (1, 3) konzentrisch ineinander angeordnet werden, danach zwischen Außen- (1) und Innenring (3) Nadelrollen (7) eingeführt werden, bevor durch einen Rolliervorgang sowohl die Anlaufborde (2) des Außen- (1) als auch die Anlaufborde (4) des Innenringes (3) umgelegt werden, und dass schließlich das Nadellager einer Gesamthärtung unterworfen wird.

## Claims

1. Method for producing a ready-to-install needle-roller bearing which is composed of a thin-walled outer ring (1) which is produced in a non-cutting process and which is provided at both sides with radially inwardly directed run-on flanges (2), between which needle rollers (7) roll on an associated outer raceway (9), and of a thin-walled inner ring (3) which is produced in a non-cutting process and which forms an associated inner raceway (10) and which is provided at both sides with radially outwardly directed run-on flanges (4), such that an encircling annular gap (5) is formed between the run-on flanges (2, 4), with the run-on flanges (4) of the inner ring (3) being aligned with the run-on flanges (2) of the outer ring (1) in the axial direction in a central position, and with the needle rollers (7) being in a full-roller configuration or arranged in a cage, **characterized in that** firstly an outer ring (1) is cut off from a cylindrical sleeve drawn in a non-cutting process and an inner ring (3) is cut off from a cylindrical sleeve drawn in a non-cutting process, the two rings (1, 3) are then arranged concentrically one inside the other, and needle rollers (7) are subsequently inserted between the outer ring (1) and inner ring (3) before both the run-on flanges (2) of the outer ring (1) and also the run-on flanges (4) of the inner ring (3) are folded over by means of a rolling process, and **in that** the needle-roller bearing is finally subjected to an all-over hardening process.

## Revendications

1. Procédé de fabrication d'un palier à aiguilles prêt au montage, qui se compose d'une bague extérieure à paroi mince (1), façonnée sans enlèvement de copeaux, qui est pourvue des deux côtés de bords d'attaque (2) orientés radialement vers l'intérieur entre lesquels des rouleaux à aiguille (7) roulent sur une piste de roulement extérieure associée (9), et d'une bague intérieure à paroi mince (3) façonnée sans enlèvement de copeaux, qui forme une piste de roulement intérieure associée (10) et qui est pourvue des deux côtés de bords d'attaque (4) orientés radialement vers l'extérieur, de sorte qu'entre les bords d'attaque (2, 4) soit formée une fente annulaire périphérique (5), les bords d'attaque (4) de la bague intérieure (3) étant en affleurement avec les bords d'attaque (2) de la bague extérieure (1) dans la direction axiale dans une position centrale, et les rouleaux à aiguilles (7) étant disposés à rouleaux jointifs ou dans une cage, **caractérisé en ce que** d'abord une bague extérieure (1) est décolletée à partir d'une douille cylindrique emboutie sans enlèvement de copeaux et une bague intérieure (3) est décolletée à partir d'une douille cylindrique emboutie sans enlèvement de copeaux, ensuite les deux bagues (1, 3) sont disposées concentriquement l'une dans l'autre, puis l'on introduit entre la bague extérieure (1) et la bague intérieure (3) des rouleaux à aiguille (7), avant de replier par une opération de laminage à la fois les bords d'attaque (2) de la bague extérieure (1) et les bords d'attaque (4) de la bague intérieure (3), et **en ce que** finalement le palier à aiguilles est soumis à un durcissement total.
